# EUROPEAN PATENT APPLICATION

(11) **EP 4 653 807 A1**
(43) Date of publication of application: **26.11.2025**
(21) Application number: 25161785.8
(22) Date of filing: 05.03.2025
(51) Int. Cl.: G01B 11/24, G06T 7/00, G06T 7/521

(54) **METHODS AND COMPUTERIZED SYSTEMS FOR DETERMINING LOCAL VARIATIONS IN SURFACES OF FABRICATED COMPONENTS**

(30) Priority: 22.05.2024 US 202418671179
(71) Applicant: The Boeing Company, Arlington, VA 22202 (US)
(72) Inventor: Freeman, Philip L., Arlington, 22202 (US)
(74) Representative: Witte, Weller & Partner Patentanwälte mbB

(57) **Abstract**

A method for determining local variations in a surface of a fabricated component includes comparing surface scan data for the fabricated component represented in a first XYZ coordinate system to surface design data for the surface of the fabricated component, determining deviation data values for the surface based on the comparing, wherein the deviation data values are represented as deviation data points, selecting a first data point and neighboring data points from the deviation data points, determining an average normal vector for the first data point based on normal vectors of the first data point and the neighboring data points, defining an XY plane of a second XYZ coordinate system perpendicular to the average normal vector for the first data point, and projecting the first data point and the neighboring data points from the first XYZ coordinate system onto the XY plane of the second XYZ coordinate system.

## Description

### FIELD

The present disclosure relates generally to determining local variations in surfaces of fabricated components and, particularly, to surfaces of fabricated components that need to mate with further components during assembly. The local variations between the surface of the fabricated component and a surface design for the fabricated component can be used to generate a design for a shim that fills the local variations and provides a smooth surface that properly mates with the further component when the fabricated component, shim and further component are joined together during assembly.

### BACKGROUND

Areal filtering is a well-established method to isolate surface features such as waviness, bumps, divots, and roughness from the overall shape and measurement noise of surface measurements. In traditional areal filtering, the surface is either considered planar or cylindrical (see, e.g., ISO 16610-71). For planar surfaces, the coordinate system is aligned so that the surface measurements can be treated as Z = f(X,Y) and the Z values are filtered. For cylindrical coordinates, the coordinate system is aligned so that R = f(θ, Z) and the R values are filtered. Previous work maps the (X, Y, Z) surface to a (U,V) plane so the three-dimensional surface can be expressed as W = f(U,V) and the W values are filtered. However, a mapping function that maps from (X, Y, Z) to (U, V) must be developed in each case. This is impractical for surfaces that do not have a CAD representation and for surfaces that are too complex for simple mappings.

Accordingly, those skilled in the art continue with research and development efforts to introduce new techniques for determining local variations in surfaces of fabricated components, particularly components that need to mate with further components during assembly.

### SUMMARY

Disclosed are examples of methods and computerized systems for determining local variations in surfaces of fabricated components and non-transitory computer-readable mediums associated therewith. The following is a non-exhaustive list of examples, which may or may not be claimed, of the subject matter according to the present disclosure.

In an example, the disclosed a method for determining local variations in a surface of a fabricated component includes: (1) comparing surface scan data for the fabricated component represented in a first XYZ coordinate system to surface design data for the surface of the fabricated component; (2) determining deviation data values for the surface of the fabricated component based on the comparing, wherein the deviation data values are represented as a plurality of deviation data points; (3) selecting a first data point and neighboring data points from the plurality of deviation data points; (4) determining an average normal vector for the first data point based on normal vectors of the first data point and the neighboring data points; (5) defining an XY plane of a second XYZ coordinate system perpendicular to the average normal vector for the first data point; and (6) projecting the first data point and the neighboring data points from the first XYZ coordinate system onto the XY plane of the second XYZ coordinate system.

In an example, the disclosed a computerized system for determining local variations in a surface of a fabricated component includes at least one computing device, at least one application program storage device and at least one data storage device. The at least one computing device includes at least one processor, associated memory and a network interface. The network interface in operative communication with the at least one processor and configured to communicate with a fabricated component data repository and a design data repository via a communication network. The at least one application program storage device in operative communication with the at least one processor and configured to store a surface analysis application program and a surface filter application program. The at least one data storage device in operative communication with the at least one processor. The at least one processor and the network interface are configured to obtain a three-dimensional point cloud representative of the surface of the fabricated component from the fabricated component data repository. The at least one processor and the network interface are configured to obtain surface design data for the fabricated component from the design data repository. The at least one processor is configured to store the three-dimensional point cloud and the surface design data in the at least one data storage device.

In an example, the disclosed a non-transitory computer-readable medium includes program instructions that, when executed by at least one processor, cause at least one computing device to perform a method for determining local variations in a surface of a fabricated component. In an example, the method includes: (1) comparing surface scan data for the fabricated component represented in a first XYZ coordinate system to surface design data for the surface of the fabricated component; (2) determining deviation data values for the surface of the fabricated component based on the comparing, wherein the deviation data values are represented as a plurality of deviation data points; (3) selecting a first data point and neighboring data points from the plurality of deviation data points; (4) determining an average normal vector for the first data point based on normal vectors of the first data point and the neighboring data points; (5) defining an XY plane of a second XYZ coordinate system perpendicular to the average normal vector for the first data point; and (6) projecting the first data point and the neighboring data points from the first XYZ coordinate system onto the XY plane of the second XYZ coordinate system.

Other examples of the disclosed methods and computerized systems for determining local variations in surfaces of fabricated components and non-transitory computer-readable mediums associated therewith will become apparent from the following detailed description, the accompanying drawings and the appended claims.

### BRIEF DESCRIPTION OF THE DRAWINGS

Fig. 1 is a flow diagram of an example of a method for determining local variations in a surface of a fabricated component;
Fig. 2A is a functional diagram showing a side view of an example of a fabricated component with local variations on a surface and scan data reflecting the local variations;
Fig. 2B is a functional diagram showing a side view of an example of surface design data for the fabricated component of Fig. 2A;
Fig. 2C is a functional diagram showing a side view of an example of deviation data values resulting from comparing the scan data of Fig. 2A to the surface design data of Fig. 2B;
Fig. 2D is a functional diagram showing a rear view of an example of the deviation data values of Fig. 2C;
Fig. 3A is a functional diagram showing a side view of an example of the deviation data values of Fig. 2C after selection of a first data point and neighboring data points;
Fig. 3B is a functional diagram showing a rear view of the deviation data values for the first data point and neighboring data points of Fig. 3A;
Fig. 4, in combination with Fig. 1, is a flow diagram of another example of a method for determining local variations in a surface of a fabricated component;
Fig. 5 is a flow diagram of an example of the comparing of the surface scan data to the surface design data of Fig. 1;
Fig. 6 is a flow diagram of an example of the determining of the deviation data values of Fig. 1;
Fig. 7 is a flow diagram of an example of the projecting of the first data point and the neighboring data points of Fig. 1;
Fig. 8 is a flow diagram of another example of the projecting of the first data point and the neighboring data points of Fig. 1;
Fig. 9, in combination with Fig. 1, is a flow diagram of yet another example of a method for determining local variations in a surface of a fabricated component;
Fig. 10, in combination with Figs. 1 and 9, is a flow diagram of still another example of a method for determining local variations in a surface of a fabricated component;
Fig. 11, in combination with Figs. 1, 9 and 10, is a flow diagram of still yet another example of a method for determining local variations in a surface of a fabricated component;
Fig. 12 is a block diagram of an example of a computerized system for determining local variations in a surface of a fabricated component;
Fig. 13 is a block diagram of an example of a non-transitory computer-readable medium associated with the methods of Figs. 1 and 4-11;
Fig. 14 is a block diagram of aircraft production and service methodology; and
Fig. 15 is a schematic illustration of an aircraft.

### DETAILED DESCRIPTION

Various examples of methods and computerized systems for determining local variations in surfaces of fabricated components are disclosed herein. Various examples of non-transitory computer-readable mediums associated with the methods and computerized systems are disclosed herein. The various examples provide techniques for determining the local variations. In particular, the techniques include determining of local variations in surfaces of fabricated components that need to mate with further components during assembly of the components. For example, the local variations between the surface of the fabricated component and a surface design for the fabricated component can be used to generate a design for a shim that fills the local variations and provides a smooth surface that properly mates with the further component when the fabricated component, shim and further component are joined together during assembly.

Areal filtering of surface measurements (e.g., point cloud data, or mesh data) is useful to separate form from surface features such as waviness, dents, ripples, and roughness. The techniques disclosed herein enable surface filtering of surface like point cloud data (or meshes) where the curvature of the surface prevents simple mappings of the data to a planar reference surface. It does this by generating a mapping at each point (rather than globally) using the local average normal to establish the map coordinates. The resulting filtered surface can be used to assess the quality of the surface against engineering requirements, generate pre-machined fillers (e.g., shims) that match the local waviness, or generate a sanding path (e.g., scan-and-sand) to selectively sand, grind, or machine away excess material to improve the smoothness of the surface.

The various examples disclosed herein can automatically generate a local map at each point of surface scan data where an XY plane of the map is perpendicular to the average local normal in the neighborhood of the point. This permits the filter to be used on a wider range of curved and contoured surfaces without needing an expert or additional software to pre-generate the XY mapping function.

For example, the robust Gaussian regression filter operates on each neighborhood around a point independently. Thus, there is no need for the mapping function to be identical at each neighborhood. However, the mapping functions need to be smoothly varying to ensure smoothness in the filtered results. A process of using a single UVW map of XYZ scan data in previous work is different in the techniques disclosed here.

For example, the various techniques disclosed herein calculate/estimate the normal vector at each point to be filtered. There are several ways to do this, and there are well known available methods for normal estimation. For each point, the average normal vector is calculated based on all points within the neighborhood. For each point, a projection of the neighborhood points to a second XYZ coordinate system is calculated where the XY plane in the second XYZ coordinate system is perpendicular to the average normal and the origin is at the point being filtered. The filtered point value in Z is calculated for the projection. The result is converted back to the original XYZ coordinate system. This process is repeated for all points until the filter converges. Because the neighborhoods have significant overlap, the average normal will be smoothly varying across the point cloud and the XY maps will be smoothly varying.

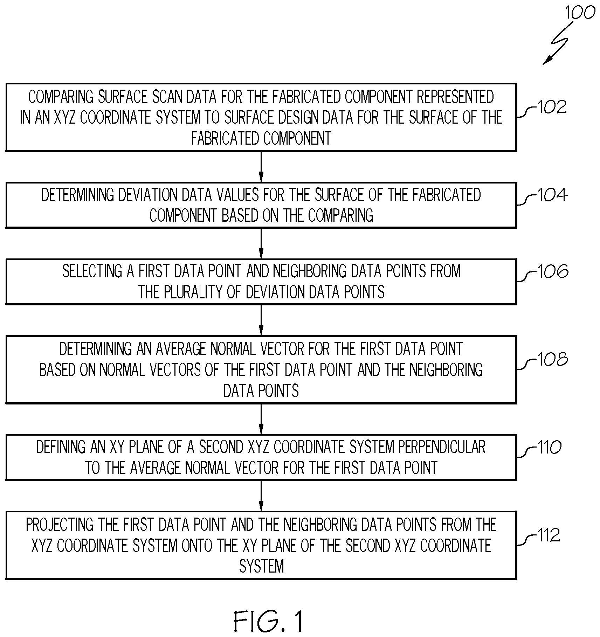

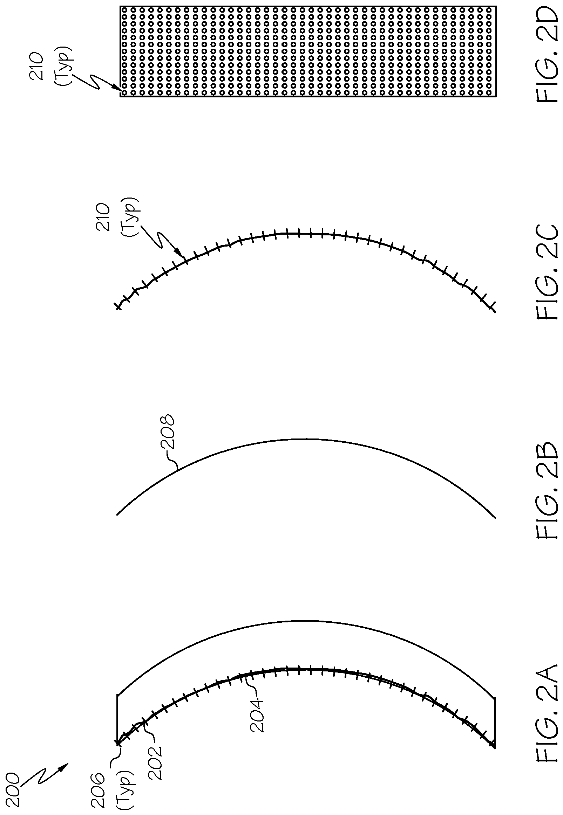

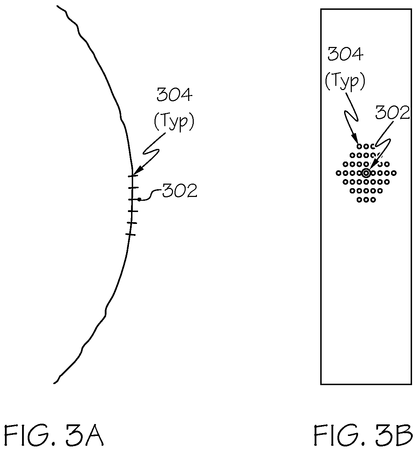

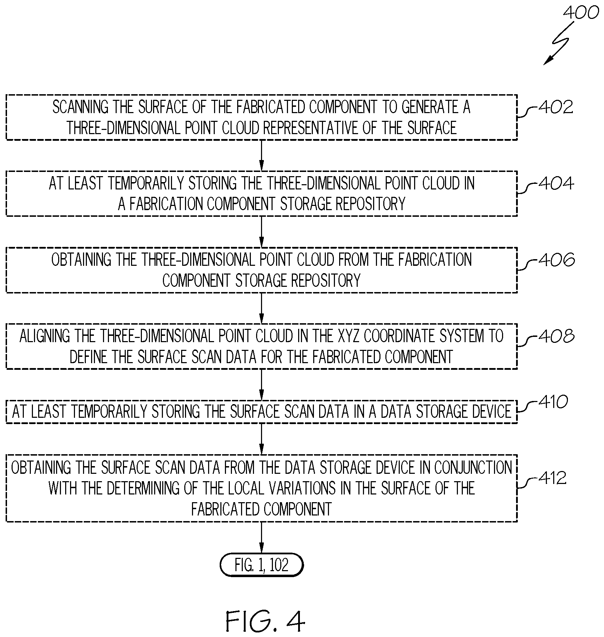

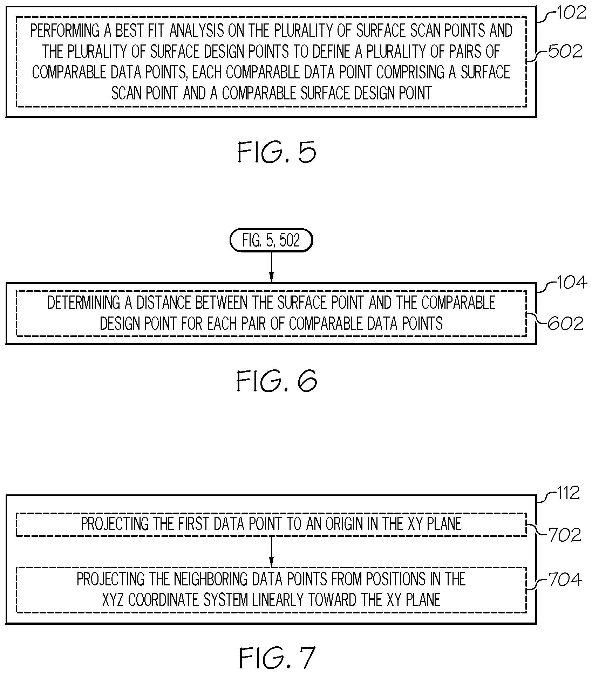

Referring generally to Figs. 1, 2A-D, 3A-B and 4-12, by way of examples, the present disclosure is directed to a method 100 for determining local variations 202 in a surface 204 of a fabricated component 200. Fig. 1 provides an example of the method 100 for determining local variations 202 in a surface 204 of a fabricated component 200. Fig. 2A provides a side view of an example of a fabricated component 200 with local variations 202 on a surface 204 and surface scan data 206 reflecting the local variations 202. Fig. 2B provides a side view of an example of surface design data 208 for the fabricated component 200 of Fig. 2A. Fig. 2C provides a side view of an example of deviation data values 210 resulting from comparing the surface scan data 206 of Fig. 2A to the surface design data 208 of Fig. 2B. Fig. 2D provides a rear view of the deviation data values 210 of Fig. 2C. Fig. 3A provides a side view of the deviation data values 210 of Fig. 2C after selection of a first data point 302 and neighboring data points 304. Fig. 3B provides a rear view of the deviation data values 210 for the first data point 302 and neighboring data points 304 of Fig. 3A. Fig. 4, in combination with Fig. 1, provides an example of the method 400 for determining local variations 202 in a surface 204 of a fabricated component 200. Fig. 5 provides an example of the comparing 102 of the surface scan data 206 to the surface design data 208 of Fig. 1.

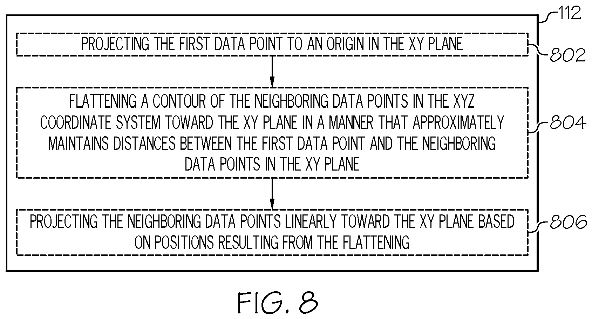

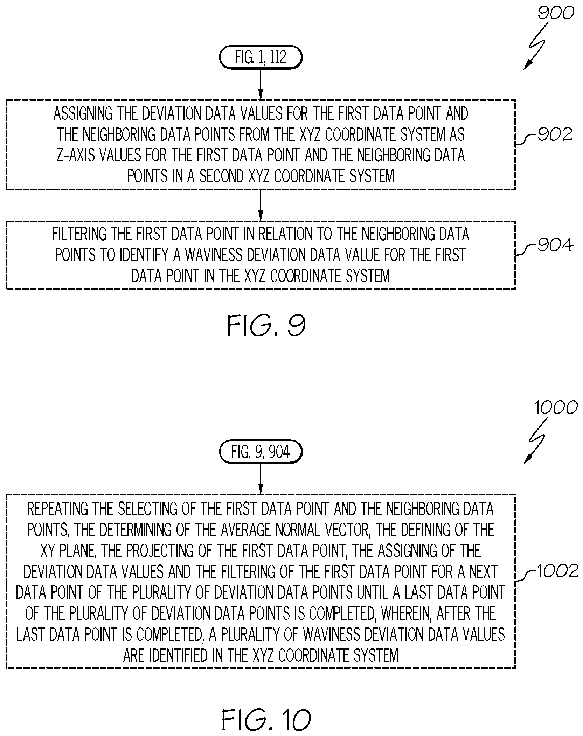

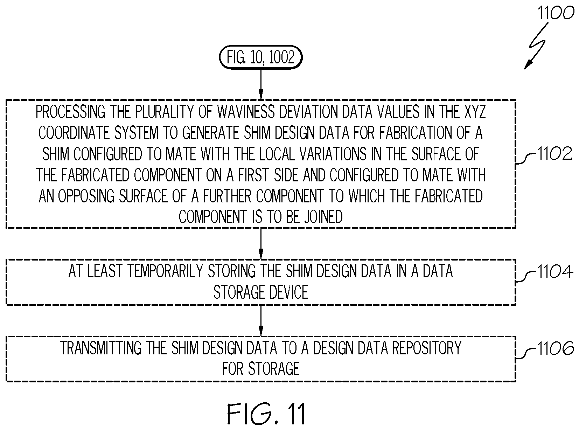

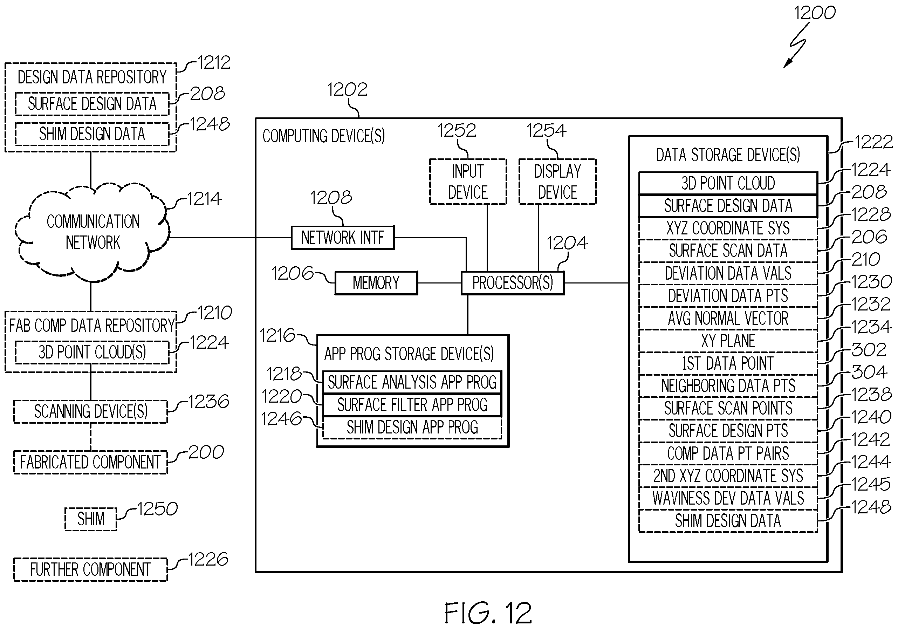

Fig. 6 provides an example of the determining 104 of the deviation data values 210 of Fig. 1. Fig. 7 provides an example of the projecting 112 of the first data point 302 and the neighboring data points 304 of Fig. 1. Fig. 8 provides another example of the projecting 112 of the first data point 302 and the neighboring data points 304 of Fig. 1. Fig. 9, in combination with Fig. 1, provides an example of the method 900 for determining local variations 202 in a surface 204 of a fabricated component 200. Fig. 10, in combination with Figs. 1 and 9, provides an example of the method 1000 for determining local variations 202 in a surface 204 of a fabricated component 200. Fig. 11, in combination with Figs. 1, 9 and 10, provides an example of the method 1100 for determining local variations 202 in a surface 204 of a fabricated component 200. Fig. 12 provides an example of a computerized system 1200 for determining local variations 202 in a surface 204 of a fabricated component 200.

With reference again to Figs. 1, 2A-D, 3A-B and 12, in one or more examples, a method 100 (see Fig. 1) for determining local variations 202 in a surface 204 of a fabricated component 200 includes comparing 102 surface scan data 206 for the fabricated component 200 represented in a first XYZ coordinate system 1228 to surface design data 208 for the surface 204 of the fabricated component 200. At 104, deviation data values 210 for the surface 204 of the fabricated component 200 are determined based on the comparing. The deviation data values 210 are represented as a plurality of deviation data points 1230. At 106, a first data point 302 and neighboring data points 304 are selected from the plurality of deviation data points 1230. At 108, an average normal vector 1232 is determined for the first data point 302 based on normal vectors of the first data point 302 and the neighboring data points 304. At 110, an XY plane 1234 of a second XYZ coordinate system 1244 perpendicular to the average normal vector 1232 is defined for the first data point 302. At 112, the first data point 302 and the neighboring data points 304 from the first XYZ coordinate system 1228 are projected onto the XY plane 1234 of the second XYZ coordinate system 1244.

In another example of the method 100, the local variations 202 include small-scale surface variations, short scale lateral variations, waviness deviations, undulations, low frequency surface variations, unexpected surface variations or any other suitable type of local variation in any suitable combination. In yet another example of the method 100, the surface 204 of the fabricated component 200 is configured to mate with an opposing surface of a further component 1226 when the fabricated component 200 is joined with the further component 1226.

In still another example of the method 100, the surface design data 208 is represented in the first XYZ coordinate system 1228. In still yet another example of the method 100, the plurality of deviation data points 1230 are represented in the first XYZ coordinate system 1228. In another example of the method 100, the neighboring data points 304 are within a predetermined neighborhood relating to the first data point 302. In yet another example of the method 100, the neighboring data points 304 are within a predetermined range of the first data point 302.

In still another example of the method 100, the normal vectors for the first data point 302 and the neighboring data points 304 are oriented perpendicular to the surface 204 of the fabricated component 200 at the first data point 302 and the neighboring data points 304. In a further example, the average normal vector 1232 at the first data point 302 is oriented in a direction based on the average of orientations of the normal vectors of the neighboring data points 304.

In still yet another example of the method 100, the normal vectors for the first data point 302 and the neighboring data points 304 are unit vectors oriented along estimated normal vectors of a three-dimensional point cloud 1224 representative of the surface 204 at the first data point 302 and the neighboring data points 304. In a further example, the average normal vector 1232 at the first data point 302 is oriented in a direction based on the average of orientations of the unit vectors to the first data point 302 with a length of one unit.

With reference again to Figs. 1, 2A-D, 4 and 12, in one or more examples, a method 400 (see Fig. 4) for determining local variations 202 in a surface 204 of a fabricated component 200 includes the method 100 of Fig. 1. The method 400 includes scanning 402 the surface 204 of the fabricated component 200 to generate a three-dimensional point cloud 1224 representative of the surface 204. At 404, the three-dimensional point cloud 1224 is at least temporarily stored in a fabricated component data repository 1210. At 406, the three-dimensional point cloud 1224 is obtained from the fabricated component data repository 1210. At 408, the three-dimensional point cloud 1224 is aligned in the first XYZ coordinate system 1228 to define the surface scan data 206 for the fabricated component 200. At 410, the surface scan data 206 is at least temporarily stored in a data storage device 1222. At 412, the surface scan data 206 is obtained from the data storage device 1222 in conjunction with the determining of the local variations 202 in the surface 204 of the fabricated component 200. The method 400 continues from 412 to 102 of Fig. 1.

In another example of the method 400, the scanning of the surface 204 is performed by a scanning device, a laser scanning device, an optical scanning device, a laser measurement system, an optical measurement system, a structured light scanner, a laser radar scanner, a light detection and ranging scanner or any other suitable scanner in any suitable combination.

With reference again to Figs. 1, 2A-D, 3A-B, 6-8 and 12, in another example of the method 100 (see Fig. 1) the surface scan data 206 includes a plurality of surface scan points 1238 and the surface design data 208 includes a plurality of surface design points 1240. Alternatively, the surface design points 1240 may be based on boundary representations of the surface design data 208 for solid modeling and computer-aided design data. The boundary representation (often abbreviated B-rep or BREP) is a method for representing a three-dimensional shape by defining the limits of its volume. A solid is represented as a collection of connected surface elements, which define the boundary between interior and exterior points. Where the surface design data 208 includes boundary representations, the surface scan data 206 may be compared to the boundary representations. Otherwise, the surface scan data 206 may be converted to the boundary representations or the surface design data 208 may be converted to the surface design points 1240 for the comparison.

In one example, the comparing 102 of the surface scan data 206 to the surface design data 208 includes performing 502 (see Fig. 5) a best fit analysis on the plurality of surface scan points 1238 and the plurality of surface design points 1240 to define a plurality of pairs of comparable data points 1242. Each comparable data point 1242 includes a surface scan point 1238 and a comparable surface design point 1240. In a further example, the best fit analysis is performed using a least squares method. In another further example, the determining 104 of the deviation data values 210 includes determining 602 (see Fig. 6) a distance between the surface scan point 1238 and the comparable surface design point 1240 for each pair of comparable data points 1242.

In yet another example of the method 100, the projecting 112 of the first data point 302 and the neighboring data points 304 includes projecting 702 (see Fig. 7) the first data point 302 to an origin in the XY plane 1234. At 704, the neighboring data points 304 are projected from positions in the first XYZ coordinate system 1228 linearly toward the XY plane 1234.

In still another example of the method 100, the projecting 112 of the first data point 302 and the neighboring data points 304 include projecting 802 (Fig. 8) the first data point 302 to an origin in the XY plane 1234. At 804, a contour of the neighboring data points 304 in the first XYZ coordinate system 1228 is flattened toward the XY plane 1234 in a manner that approximately maintains distances between the first data point 302 and the neighboring data points 304 in the XY plane 1234. At 806, the neighboring data points 304 are projected linearly toward the XY plane 1234 based on positions resulting from the flattening.

With reference again to Figs. 1, 2A-D, 3A-B, 9 and 12, in one or more examples, a method 900 (see Fig. 9) for determining local variations 202 in a surface 204 of a fabricated component 200 includes the method 100 of Fig. 1. The method 900 continues from 112 of Fig. 1 to 902 where the deviation data values 210 for the first data point 302 and the neighboring data points 304 from the first XYZ coordinate system 1228 are assigned as Z-axis values for the first data point 302 and the neighboring data points 304 in the second XYZ coordinate system 1244. At 904, the first data point 302 is filtered in relation to the neighboring data points 304 to identify a waviness deviation data value 1245 for the first data point 302 in the first XYZ coordinate system 1228. In another example of the method 900, the filtering 904 of the first data point 302 is performed using a low-pass filter. In yet another example of the method 900, the filtering 904 of the first data point 302 is performed using a robust gaussian regression filter.

With reference again to Figs. 1, 2A-D, 3A-B, 9, 10 and 12, in one or more examples, a method 1000 (see Fig. 10) for determining local variations 202 in a surface 204 of a fabricated component 200 includes the method 100 of Fig. 1 and the method 900 of Fig. 9. The method 1000 continues from 904 of Fig. 9 to 1002 where the selecting 106 of the first data point 302 and the neighboring data points 304, the determining 108 of the average normal vector 1232, the defining 110 of the XY plane 1234, the projecting 112 of the first data point 302 and the neighboring data points 304, the assigning 902 of the deviation data values 210 and the filtering 904 the first data point 302 are repeated for a next data point 302 of the plurality of deviation data points 1230 until a last data point 302 of the plurality of deviation data points 1230 is completed. One or more further iterations of the selecting 106, the determining 108, the defining 110, the projecting 112, the assigning 902 and the filtering 904 may be performed for the first data point 302 to the last data point 302 until convergence. After the last data point 302 is completed, a plurality of waviness deviation data values 1245 are identified in the first XYZ coordinate system 1228. In another example of the method 1000, the plurality of waviness deviation data values 1245 in the first XYZ coordinate system 1228 define the local variations 202 in the surface 204 of the fabricated component 200.

With reference again to Figs. 1, 2A-D, 3A-B and 9-12, in one or more examples, a method 1100 (see Fig. 11) for determining local variations 202 in a surface 204 of a fabricated component 200 includes the method 100 of Fig. 1, the method 900 of Fig. 9 and the method 1000 of Fig. 10. The method 1100 continues from 1002 of Fig. 10 to 1102 where processing 1102 the plurality of waviness deviation data values 1245 in the first XYZ coordinate system 1228 are processed to generate shim design data 1248 for fabrication of a shim 1250 configured to mate with the local variations 202 in the surface 204 of the fabricated component 200 on a first side and configured to mate with an opposing surface of a further component 1226 to which the fabricated component 200 is to be joined.

In another example of the method 1100, the shim 1250 is configured for positioning between the fabricated component 200 and the further component 1226 to fill gaps between the fabricated component 200 and the further component 1226 when the fabricated component 200, the shim 1250 and the further component 1226 are joined together. In yet another example, the method 1100 also includes at least temporarily storing 1104 the shim design data 1248 in a data storage device 1222. At 1106, the shim design data 1248 is transmitted to a design data repository 1212 for storage.

Referring generally to Figs. 2A-D, 3A-B and 12, by way of examples, the present disclosure is directed to a computerized system 1200 for determining local variations 202 in a surface 204 of a fabricated component 200. Fig. 2A provides a side view of an example of a fabricated component 200 with local variations 202 on a surface 204 and surface scan data 206 reflecting the local variations 202. Fig. 2B provides a side view of an example of surface design data 208 for the fabricated component 200 of Fig. 2A. Fig. 2C provides a side view of an example of deviation data values 210 resulting from comparing the surface scan data 206 of Fig. 2A to the surface design data 208 of Fig. 2B. Fig. 2D provides a rear view of the deviation data values 210 of Fig. 2C. Fig. 3A provides a side view of the deviation data values 210 of Fig. 2C after selection of a first data point 302 and neighboring data points 304. Fig. 3B provides a rear view of the deviation data values 210 for the first data point 302 and neighboring data points 304 of Fig. 3A. Fig. 12 provides an example of the computerized system 1200 for determining local variations 202 in a surface 204 of a fabricated component 200.

With reference again to Figs. 2A-D, 3A-B and 12, in one or more examples, a computerized system 1200 (see Fig. 12) for determining local variations 202 in a surface 204 of a fabricated component 200 includes at least one computing device 1202, at least one application program storage device 1216 and at least one data storage device 1222. The at least one computing device 1202 includes at least one processor 1204, associated memory 1206 and a network interface 1208. The network interface 1208 in operative communication with the at least one processor 1204 and configured to communicate with a fabricated component data repository 1210 and a design data repository 1212 via a communication network 1214. The at least one application program storage device 1216 is in operative communication with the at least one processor 1204 and configured to store a surface analysis application program 1218 and a surface filter application program 1220. The at least one data storage device 1222 in operative communication with the at least one processor 1204. The at least one processor 1204 and the network interface 1208 are configured to obtain a three-dimensional point cloud 1224 representative of the surface 204 of the fabricated component 200 from the fabricated component data repository 1210. The at least one processor 1204 and the network interface 1208 are configured to obtain surface design data 208 for the fabricated component 200 from the design data repository 1212. The at least one processor 1204 is configured to store the three-dimensional point cloud 1224 and the surface design data 208 in the at least one data storage device 1222. The at least one computing device 1202 may also include an input device 1252 and a display device 1254.

In another example of the computerized system 1200, the local variations 202 includes small-scale surface variations, short scale lateral variations, waviness deviations, undulations, low frequency surface variations, unexpected surface variations or any other suitable type of local variations in any suitable combination.

In yet another example of the computerized system 1200, surface 204 of the fabricated component 200 is configured to mate with an opposing surface of a further component 1226 when the fabricated component 200 is joined with the further component 1226.

In still another example of the computerized system 1200, the surface design data 208 is represented in a first XYZ coordinate system 1228.

In still yet another example of the computerized system 1200, the at least one processor 1204, in conjunction with the surface analysis application program 1218, is configured to compare surface scan data 206 for the fabricated component 200 represented in a first XYZ coordinate system 1228 to surface design data 208 for the fabricated component 200. The at least one data storage device 1222 is configured to store the first XYZ coordinate system 1228. The at least one processor 1204, in conjunction with the surface analysis application program 1218, is configured to determine deviation data values 210 for the surface 204 of the fabricated component 200 based on comparing the surface scan data 206 to the surface design data 208. The deviation data values 210 are represented as a plurality of deviation data points 1230. The at least one data storage device 1222 is configured to store the deviation data values 210 and the plurality of deviation data points 1230. The at least one processor 1204, in conjunction with the surface analysis application program 1218, is configured to select a first data point 302 and neighboring data points 304 from the plurality of deviation data points 1230. The at least one processor 1204, in conjunction with the surface analysis application program 1218, is configured to determine an average normal vector 1232 for the first data point 302 based on normal vectors of the first data point 302 and the neighboring data points 304. The at least one data storage device 1222 is configured to store the average normal vector 1232. The at least one processor 1204, in conjunction with the surface analysis application program 1218, is configured to define an XY plane 1234 of a second XYZ coordinate system 1244 perpendicular to the average normal vector 1232 for the first data point 302. The at least one data storage device 1222 is configured to store the XY plane 1234. The at least one processor 1204, in conjunction with the surface analysis application program 1218, is configured to project the first data point 302 and the neighboring data points 304 from the first XYZ coordinate system 1228 onto the XY plane 1234 of the second XYZ coordinate system 1244. The at least one data storage device 1222 is configured to store the first data point 302 and the neighboring data points 304 in the XY plane 1234.

In a further example, the plurality of deviation data points 1230 are represented in the first XYZ coordinate system 1228.

In another further example, the computerized system 1200 also includes at least one scanning device 1236 in operative communication with the fabricated component data repository 1210 and configured to scan the surface 204 of the fabricated component 200 to generate the three-dimensional point cloud 1224 representative of the surface 204. The at least one scanning device 1236 is configured to at least temporarily store the three-dimensional point cloud 1224 in the fabricated component data repository 1210. The at least one processor 1204 and the at least one data storage device 1222, in conjunction with the surface analysis application program 1218, are configured to obtain the three-dimensional point cloud 1224 from the fabricated component data repository 1210, align the three-dimensional point cloud 1224 in the first XYZ coordinate system 1228 to define the surface scan data 206 for the fabricated component 200 and store the surface scan data 206 in the at least one data storage device 1222. The at least one processor 1204 is configured to obtain the surface scan data 206 from the at least one data storage device 1222 in conjunction with determining the local variations 202 in the surface 204 of the fabricated component 200.

In an even further example, the at least one scanning device 1236 includes one or more of a laser scanning device, an optical scanning device, a laser measurement system, an optical measurement system, a structured light scanner, a laser radar scanner, a light detection and ranging scanner or any other suitable scanner in any suitable combination.

In yet another further example, the surface scan data 206 includes a plurality of surface scan points 1238 and the surface design data 208 includes a plurality of surface design points 1240. The at least one processor 1204, in conjunction with the surface analysis application program 1218, is configured to obtain the surface scan data 206, the plurality of surface scan points 1238, the surface design data 208 and the plurality of surface design points 1240 from the at least one data storage device 1222. The at least one processor 1204, in conjunction with the surface analysis application program 1218, is configured to compare the surface scan data 206 to the surface design data 208 by performing a best fit analysis on the plurality of surface scan points 1238 and the plurality of surface design points 1240 to define a plurality of pairs of comparable data points 1242. Each comparable data point 1242 includes a surface scan point 1238 and a comparable surface design point 1240. The at least one data storage device 1222 is configured to store the plurality of pairs of comparable data points 1242.

Alternatively, the surface design points 1240 may be based on boundary representations of the surface design data 208 for solid modeling and computer-aided design data. The boundary representation (often abbreviated B-rep or BREP) is a method for representing a three-dimensional shape by defining the limits of its volume. A solid is represented as a collection of connected surface elements, which define the boundary between interior and exterior points. Where the surface design data 208 includes boundary representations, the at least one processor1204, in conjunction with the surface analysis application program 1218, may compare the surface scan data 206 to the boundary representations. Otherwise, the at least one processor1204, in conjunction with the surface analysis application program 1218, may convert the surface scan data 206 to the boundary representations or may convert the surface design data 208 to the surface design points 1240 for the comparison.

In an even further example, the best fit analysis is performed using a least squares method. In another even further example, the at least one processor 1204, in conjunction with the surface analysis application program 1218, is configured to determine the deviation data values 210 by determining a distance between the surface scan point 1238 and the comparable surface design point 1240 for each pair of comparable data points 1242.

In still another further example, the at least one processor 1204, in conjunction with the surface analysis application program 1218, is configured to project the first data point 302 and the neighboring data points 304 by projecting the first data point 302 to an origin in the XY plane 1234 and projecting the neighboring data points 304 from positions in the first XYZ coordinate system 1228 linearly toward the XY plane 1234.

In still yet another further example, the at least one processor 1204, in conjunction with the surface analysis application program 1218, is configured to project the first data point 302 and the neighboring data points 304 by projecting the first data point 302 to an origin in the XY plane 1234, flattening a contour of the neighboring data points 304 in the first XYZ coordinate system 1228 toward the XY plane 1234 in a manner that approximately maintains distances between the first data point 302 and the neighboring data points 304 in the XY plane 1234 and projecting the neighboring data points 304 linearly toward the XY plane 1234 based on positions resulting from the flattening.

In another further example, the at least one processor 1204 and the at least one data storage device 1222, in conjunction with the surface filter application program 1220, are configured to assign the deviation data values 210 for the first data point 302 and the neighboring data points 304 from the first XYZ coordinate system 1228 as Z-axis values for the first data point 302 and the neighboring data points 304 in the second XYZ coordinate system 1244. The at least one processor 1204 and the at least one data storage device 1222, in conjunction with the surface filter application program 1220, are configured to filter the first data point 302 in relation to the neighboring data points 304 to identify a waviness deviation data value 1245 for the first data point 302 in the first XYZ coordinate system 1228.

In an even further example, the surface filter application program performs filtering of the first data point using a low-pass filter. In another even further example, the surface filter application program performs filtering of the first data point using a robust gaussian regression filter.

In yet another further example, the at least one processor 1204, the at least one application program storage device 1216 and the at least one data storage device 1222, in conjunction with the surface analysis application program 1218 and the surface filter application program 1220, are configured to repeat selecting the first data point 302 and the neighboring data points 304, determining the average normal vector 1232, defining of the XY plane 1234, projecting the first data point 302, assigning the deviation data values 210 and filtering the first data point 302 for a next data point 302 of the plurality of deviation data points 1230 until a last data point 302 of the plurality of deviation data points 1230 is completed. One or more further iterations of the selecting 106, the determining 108, the defining 110, the projecting 112, the assigning 902 and the filtering 904 may be performed for the first data point 302 to the last data point 302 until convergence. After the last data point 302 of the plurality of deviation data points 1230 is completed, a plurality of waviness deviation data values 1245 are identified in the first XYZ coordinate system 1228. The at least one data storage device 1222 is configured to store the plurality of waviness deviation data values 1245 in the first XYZ coordinate system 1228.

In an even yet further example, the plurality of waviness deviation data values 1245 in the first XYZ coordinate system 1228 define the local variations 202 in the surface 204 of the fabricated component 200.

In another even further example, the at least one processor 1204, in conjunction with a shim design application program 1246, is configured to process the plurality of waviness deviation data values 1245 in the first XYZ coordinate system 1228 to generate shim design data 1248 for fabrication of a shim 1250 configured to mate with the local variations 202 in the surface 204 of the fabricated component 200 on a first side and configured to mate with an opposing surface of a further component 1226 to which the fabricated component 200 is to be joined. The at least one data storage device 1222 is configured to store the shim design data 1248.

In an even still further example, the shim 1250 is configured for positioning between the fabricated component 200 and the further component 1226 to fill gaps between the fabricated component 200 and the further component 1226 when the fabricated component 200, the shim 1250 and the further component 1226 are joined together. In another even still further example, the at least one processor 1204, in conjunction with the shim design application program 1246, is configured to at least temporarily store the shim design data 1248 in the data storage device 1222 and to transmit the shim design data 1248 to the design data repository 1212 for storage.

Referring generally to Figs. 1, Figs. 2A-D, 3A-B and 4-13, by way of examples, the present disclosure is directed to a non-transitory computer-readable medium 1300 that including program instructions that, when executed by at least one processor 1204, cause at least one computing device 1202 to perform a method 100, 400, 900, 1000, 1100 for determining local variations 202 in a surface 204 of a fabricated component 200. Fig. 1 provides an example of the method 100 for determining local variations 202 in a surface 204 of a fabricated component 200. Fig. 2A provides a side view of an example of a fabricated component 200 with local variations 202 on a surface 204 and surface scan data 206 reflecting the local variations 202. Fig. 2B provides a side view of an example of surface design data 208 for the fabricated component 200 of Fig. 2A. Fig. 2C provides a side view of an example of deviation data values 210 resulting from comparing the surface scan data 206 of Fig. 2A to the surface design data 208 of Fig. 2B. Fig. 2D provides a rear view of the deviation data values 210 of Fig. 2C. Fig. 3A provides a side view of the deviation data values 210 of Fig. 2C after selection of a first data point 302 and neighboring data points 304. Fig. 3B provides a rear view of the deviation data values 210 for the first data point 302 and neighboring data points 304 of Fig. 3A. Fig. 4, in combination with Fig. 1, provides an example of the method 400 for determining local variations 202 in a surface 204 of a fabricated component 200. Fig. 5 provides an example of the comparing 102 of the surface scan data 206 to the surface design data 208 of Fig. 1. Fig. 6 provides an example of the determining 104 of the deviation data values 210 of Fig. 1.

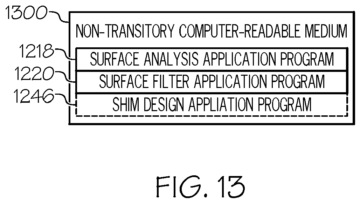

Fig. 7 provides an example of the projecting 112 of the first data point 302 and the neighboring data points 304 of Fig. 1. Fig. 8 provides another example of the projecting 112 of the first data point 302 and the neighboring data points 304 of Fig. 1. Fig. 9, in combination with Fig. 1, provides an example of the method 900 for determining local variations 202 in a surface 204 of a fabricated component 200. Fig. 10, in combination with Figs. 1 and 9, provides an example of the method 1000 for determining local variations 202 in a surface 204 of a fabricated component 200. Fig. 11, in combination with Figs. 1, 9 and 10, provides an example of the method 1100 for determining local variations 202 in a surface 204 of a fabricated component 200. Fig. 12 provides an example of a computerized system 1200 for determining local variations 202 in a surface 204 of a fabricated component 200. Fig. 13 provides an example of the non-transitory computer-readable medium 1300 associated with the methods 100, 400, 900, 1000, 1100 of Figs. 1 and 4-11.

With reference again to Figs. 1, Figs. 2A-D, 3A-B, 12 and 13, in one or more examples, a non-transitory computer-readable medium 1300 is disclosed. The non-transitory computer-readable medium 1300 includes program instructions that, when executed by at least one processor 1204, cause at least one computing device 1202 to perform a method 100 (see Fig. 1) for determining local variations 202 in a surface 204 of a fabricated component 200. The method 100 includes comparing 102 surface scan data 206 for the fabricated component 200 represented in a first XYZ coordinate system 1228 to surface design data 208 for the surface 204 of the fabricated component 200. At 104, deviation data values 210 for the surface 204 of the fabricated component 200 are determined based on the comparing. The deviation data values 210 are represented as a plurality of deviation data points 1230. At 106, a first data point 302 and neighboring data points 304 are selected from the plurality of deviation data points 1230. At 108, an average normal vector 1232 is determined for the first data point 302 based on normal vectors of the first data point 302 and the neighboring data points 304. At 110, an XY plane 1234 of a second XYZ coordinate system 1244 perpendicular to the average normal vector 1232 is defined for the first data point 302. At 112, the first data point 302 and the neighboring data points 304 from the first XYZ coordinate system 1228 are projected onto the XY plane 1234 of the second XYZ coordinate system 1244.

With reference again to Figs. 1, Figs. 2A-D, 4, 12 and 13, in one or more examples, the non-transitory computer-readable medium 1300 includes program instructions that, when executed by at least one processor 1204, cause at least one computing device 1202 to perform a method 400 (see Fig. 4) for determining local variations 202 in a surface 204 of a fabricated component 200. The method 400 includes the method 100 of Fig. 1. The method 400 includes scanning 402 the surface 204 of the fabricated component 200 to generate a three-dimensional point cloud 1224 representative of the surface 204. At 404, the three-dimensional point cloud 1224 is at least temporarily stored in a fabricated component data repository 1210. At 406, the three-dimensional point cloud 1224 is obtained from the fabricated component data repository 1210. At 408, the three-dimensional point cloud 1224 is aligned in the first XYZ coordinate system 1228 to define the surface scan data 206 for the fabricated component 200. At 410, the surface scan data 206 is at least temporarily stored in a data storage device 1222. At 412, the surface scan data 206 is obtained from the data storage device 1222 in conjunction with the determining of the local variations 202 in the surface 204 of the fabricated component 200. The method 400 continues from 412 to 102 of Fig. 1.

With reference again to Figs. 1, Figs. 2A-D, 3A-B, 6-8, 12 and 13, in another example of the non-transitory computer-readable medium 1300, the surface scan data 206 includes a plurality of surface scan points 1238 and the surface design data 208 includes a plurality of surface design points 1240. Alternatively, the surface design points 1240 may be based on boundary representations of the surface design data 208 for solid modeling and computer-aided design data. The boundary representation (often abbreviated B-rep or BREP) is a method for representing a three-dimensional shape by defining the limits of its volume. A solid is represented as a collection of connected surface elements, which define the boundary between interior and exterior points. Where the surface design data 208 includes boundary representations, the surface scan data 206 may be compared to the boundary representations. Otherwise, the surface scan data 206 may be converted to the boundary representations or the surface design data 208 may be converted to the surface design points 1240 for the comparison.

In one example, the comparing 102 of the surface scan data 206 to the surface design data 208 in the method 100 (see Fig. 1) includes performing 502 (see Fig. 5) a best fit analysis on the plurality of surface scan points 1238 and the plurality of surface design points 1240 to define a plurality of pairs of comparable data points 1242. Each comparable data point 1242 includes a surface scan point 1238 and a comparable surface design point 1240. In a further example, the best fit analysis is performed using a least squares method. In another further example of the method 100, the determining 104 of the deviation data values 210 includes determining 602 (see Fig. 6) a distance between the surface scan point 1238 and the comparable surface design point 1240 for each pair of comparable data points 1242.

In yet another example of the method 100, the projecting 112 of the first data point 302 and the neighboring data points 304 includes projecting 702 (see Fig. 7) the first data point 302 to an origin in the XY plane 1234. At 704, the neighboring data points 304 are projected from positions in the first XYZ coordinate system 1228 linearly toward the XY plane 1234.

In still another example of the method 100, the projecting 112 of the first data point 302 and the neighboring data points 304 include projecting 802 (Fig. 8) the first data point 302 to an origin in the XY plane 1234. At 804, a contour of the neighboring data points 304 in the first XYZ coordinate system 1228 is flattened toward the XY plane 1234 in a manner that approximately maintains distances between the first data point 302 and the neighboring data points 304 in the XY plane 1234. At 806, the neighboring data points 304 are projected linearly toward the XY plane 1234 based on positions resulting from the flattening.

With reference again to Figs. 1, 2A-D, 9, 12 and 13, in one or more examples, the non-transitory computer-readable medium 1300 includes program instructions that, when executed by at least one processor 1204, cause at least one computing device 1202 to perform a method 900 (see Fig. 9) for determining local variations 202 in a surface 204 of a fabricated component 200. The method 900 includes the method 100 of Fig. 1. The method 900 continues from 112 of Fig. 1 to 902 where the deviation data values 210 for the first data point 302 and the neighboring data points 304 from the first XYZ coordinate system 1228 are assigned as Z-axis values for the first data point 302 and the neighboring data points 304 in the second XYZ coordinate system 1244. At 904, the first data point 302 is filtered in relation to the neighboring data points 304 to identify a waviness deviation data value 1245 for the first data point 302 in the first XYZ coordinate system 1228. In another example of the method 900, the filtering 904 of the first data point 302 is performed using a low-pass filter. In yet another example of the method 900, the filtering 904 of the first data point 302 is performed using a robust gaussian regression filter.

With reference again to Figs. 1, 2A-D, 10, 12 and 13, in one or more examples, the non-transitory computer-readable medium 1300 includes program instructions that, when executed by at least one processor 1204, cause at least one computing device 1202 to perform a method 1000 (see Fig. 10) for determining local variations 202 in a surface 204 of a fabricated component 200. The method 1000 includes the method 100 of Fig. 1 and the method 900 of Fig. 9. The method 1000 continues from 904 of Fig. 9 to 1002 where the selecting 106 of the first data point 302 and the neighboring data points 304, the determining 108 of the average normal vector 1232, the defining 110 of the XY plane 1234, the projecting 112 of the first data point 302 and the neighboring data points 304, the assigning 902 of the deviation data values 210 and the filtering 904 the first data point 302 are repeated for a next data point 302 of the plurality of deviation data points 1230 until a last data point 302 of the plurality of deviation data points 1230 is completed. One or more further iterations of the selecting 106, the determining 108, the defining 110, the projecting 112, the assigning 902 and the filtering 904 may be performed for the first data point 302 to the last data point 302 until convergence. After the last data point 302 is completed, a plurality of waviness deviation data values 1245 are identified in the first XYZ coordinate system 1228. In another example of the method 1000, the plurality of waviness deviation data values 1245 in the first XYZ coordinate system 1228 define the local variations 202 in the surface 204 of the fabricated component 200.

With reference again to Figs. 1, 2A-D, 11, 12 and 13, in one or more examples, the non-transitory computer-readable medium 1300 includes program instructions that, when executed by at least one processor 1204, cause at least one computing device 1202 to perform a method 1100 (see Fig. 11) for determining local variations 202 in a surface 204 of a fabricated component 200. The method 1100 includes the method 100 of Fig. 1, the method 900 of Fig. 9 and the method 1000 of Fig. 10. The method 1100 continues from 1002 of Fig. 10 to 1102 where processing 1102 the plurality of waviness deviation data values 1245 in the first XYZ coordinate system 1228 are processed to generate shim design data 1248 for fabrication of a shim 1250 configured to mate with the local variations 202 in the surface 204 of the fabricated component 200 on a first side and configured to mate with an opposing surface of a further component 1226 to which the fabricated component 200 is to be joined.

In another example of the method 1100, the shim 1250 is configured for positioning between the fabricated component 200 and the further component 1226 to fill gaps between the fabricated component 200 and the further component 1226 when the fabricated component 200, the shim 1250 and the further component 1226 are joined together. In yet another example, the method 1100 also includes at least temporarily storing 1104 the shim design data 1248 in a data storage device 1222. At 1106, the shim design data 1248 is transmitted to a design data repository 1212 for storage.

Examples of methods 100, 400, 900, 1000, 1100 and computerized systems 1200 for determining local variations 202 in a surface 204 of a fabricated component 200 and non-transitory computer-readable mediums 1300 associated therewith may be related to or used in the context of aircraft design and manufacture. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to methods for design and manufacture of various types of vehicles and in the design and construction of various types of transportation structures.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, control system, device, computing device, processor, structure, article, element, component, or hardware "configured to" perform a specified function is indeed capable of performing the specified function without any alteration, rather than merely having potential to perform the specified function after further modification. In other words, the system, apparatus, device, control system, computing device, processor, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, control system, device, computing device, processor, structure, article, element, component, or hardware that enable the system, apparatus, control system, device, computing device, processor, structure, article, element, component, or hardware to perform the specified function without further modification. For purposes of this disclosure, a system, apparatus, device, control system, device, computing device, processor, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/' symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1 and 4-11, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 1 and 4-11 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Figs. 2A-D, 3A-B, 12 and 13, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 2A-D, 3A-B, 12 and 13, referred to above, need be included in every example and not all elements, features, and/or components described herein are necessarily depicted in each illustrative example. Accordingly, some of the elements, features, and/or components described and illustrated in Figs. 2A-D, 3A-B, 12 and 13 may be combined in various ways without the need to include other features described and illustrated in Figs. 2A-D, 3A-B, 12 and 13, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2A-D, 3A-B, 12 and 13, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 2A-D, 3A-B, 12 and 13, and such elements, features, and/or components may not be discussed in detail herein with reference to each of Figs. 2A-D, 3A-B, 12 and 13. Similarly, all elements, features, and/or components may not be labeled in each of Figs. 2A-D, 3A-B, 12 and 13, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

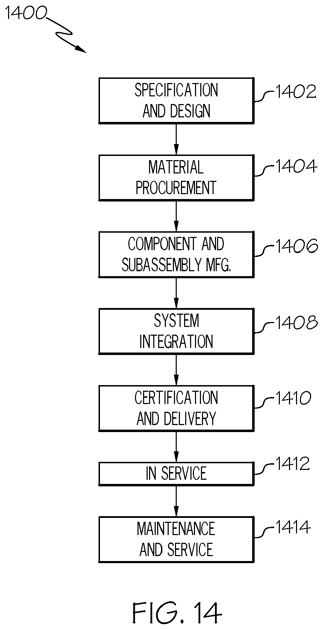

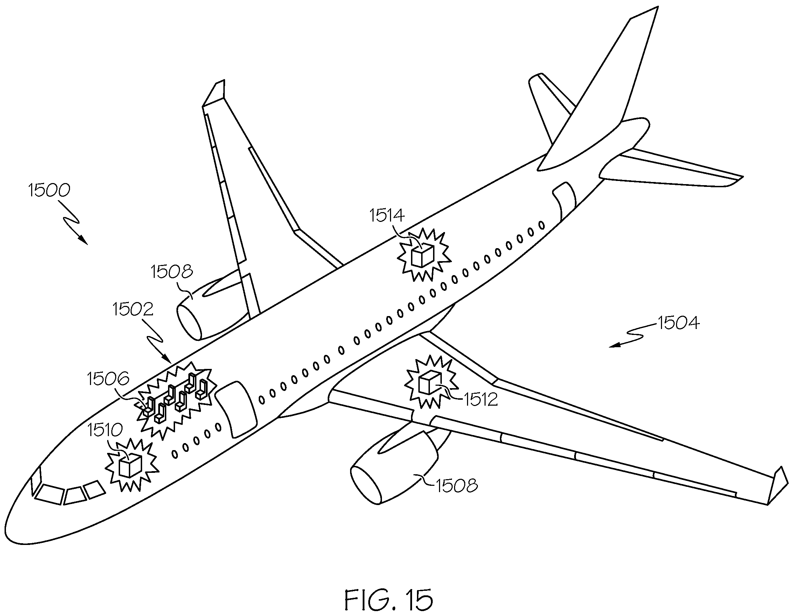

Examples of the subject matter disclosed herein may be described in the context of aircraft manufacturing and service method 1400 as shown in Fig. 14 and aircraft 1500 as shown in Fig. 15. In one or more examples, the disclosed methods for determining local variations 202 in a surface 204 of a fabricated component 200 may be used in aircraft manufacturing. During pre-production, the service method 1400 may include specification and design (block 1402) of aircraft 1500 and material procurement (block 1404). During production, component and subassembly manufacturing (block 1406) and system integration (block 1408) of aircraft 1500 may take place. Thereafter, aircraft 1500 may go through certification and delivery (block 1410) to be placed in service (block 1412). While in service, aircraft 1500 may be scheduled for routine maintenance and service (block 1414). Routine maintenance and service may include modification, reconfiguration, refurbishment, etc. of one or more systems of aircraft 1500.

Each of the processes of the service method 1400 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 15, aircraft 1500 produced by the service method 1400 may include airframe 1502 with a plurality of high-level systems 1504 and interior 1506. Examples of high-level systems 1504 include one or more of propulsion system 1508, electrical system 1510, hydraulic system 1512, and environmental system 1514. Any number of other systems may be included. Although an aerospace example is shown, the principles disclosed herein may be applied to other industries, such as the automotive industry. Accordingly, in addition to aircraft 1500, the principles disclosed herein may apply to other vehicles, e.g., land vehicles, marine vehicles, space vehicles, etc.

The disclosed methods for determining local variations 202 in a surface 204 of a fabricated component 200 may be employed during any one or more of the stages of the manufacturing and service method 1400. For example, components or subassemblies corresponding to component and subassembly manufacturing (block 1406) may be fabricated or manufactured in a manner similar to components or subassemblies produced while aircraft 1500 is in service (block 1412). Also, one or more examples of the tooling set(s), system(s), method(s), or any combination thereof may be utilized during production stages (block 1406 and block 1408), for example, by substantially expediting assembly of or reducing the cost of aircraft 1500. Similarly, one or more examples of the tooling set, system or method realizations, or a combination thereof, may be utilized, for example and without limitation, while aircraft 1500 is in service (block 1412) and/or during maintenance and service (block 1414).

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 400, 900, 1000, 1100 and computerized systems 1200 for determining local variations 202 in a surface 204 of a fabricated component 200 and non-transitory computer-readable mediums 1300 associated therewith have been shown and described, modifications may occur to those skilled in the art upon reading the specification. The present application includes such modifications and is limited only by the scope of the claims.

According to the present disclosure, a method for determining local variations in a surface of a fabricated component, a computerized system and a non-transitory computer-readable medium as defined in the independent claims are provided. Further embodiments are defined in the dependent claims. Although the scope is only defined by the claims, the below embodiments, examples (worded as clauses), and aspects are present for aiding in understanding the background and advantages.
Clause 1. A method for determining local variations in a surface of a fabricated component, comprising:
   comparing surface scan data for the fabricated component represented in a first XYZ coordinate system to surface design data for the surface of the fabricated component;
   determining deviation data values for the surface of the fabricated component based on the comparing, wherein the deviation data values are represented as a plurality of deviation data points;
   selecting a first data point and neighboring data points from the plurality of deviation data points;
   determining an average normal vector for the first data point based on normal vectors of the first data point and the neighboring data points;
   defining an XY plane of a second XYZ coordinate system perpendicular to the average normal vector for the first data point; and
   projecting the first data point and the neighboring data points from the first XYZ coordinate system onto the XY plane of the second XYZ coordinate system.
Clause 2. The method of Clause 1 wherein the local variations comprise at least one of small-scale surface variations, short scale lateral variations, waviness deviations, undulations, low frequency surface variations and unexpected surface variations.
Clause 3. The method according to any of the preceding Clauses wherein the surface of the fabricated component is configured to mate with an opposing surface of a further component when the fabricated component is joined with the further component.
Clause 4. The method according to any of the preceding Clauses wherein the surface design data is represented in the first XYZ coordinate system.
Clause 5. The method according to any of the preceding Clauses wherein the plurality of deviation data points are represented in the first XYZ coordinate system.
Clause 6. The method according to any of the preceding Clauses wherein the neighboring data points are within a predetermined neighborhood relating to the first data point.
Clause 7. The method according to any of the preceding Clauses wherein the neighboring data points are within a predetermined range of the first data point.
Clause 8. The method according to any of the preceding Clauses wherein the normal vectors for the first data point and the neighboring data points are oriented perpendicular to the surface of the fabricated component at the first data point and the neighboring data points.
Clause 9. The method of Clause 8 wherein the average normal vector at the first data point is oriented in a direction based on the average of orientations of the normal vectors of the neighboring data points.
Clause 10. The method according to any of the preceding Clauses wherein the normal vectors for the first data point and the neighboring data points are unit vectors oriented along estimated normal vectors of a three-dimensional point cloud representative of the surface at the first data point and the neighboring data points.
Clause 11. The method of Clause 10 wherein the average normal vector at the first data point is oriented in a direction based on the average of orientations of the unit vectors to the first data point with a length of one unit.
Clause 12. The method according to any of the preceding Clauses further comprising:
   scanning the surface of the fabricated component to generate a three-dimensional point cloud representative of the surface;
   at least temporarily storing the three-dimensional point cloud in a fabricated component data repository;
   obtaining the three-dimensional point cloud from the fabricated component data repository;
   aligning the three-dimensional point cloud in the first XYZ coordinate system to define the surface scan data for the fabricated component;
   at least temporarily storing the surface scan data in a data storage device; and
   obtaining the surface scan data from the data storage device in conjunction with the determining of the local variations in the surface of the fabricated component.
Clause 13. The method of Clause 12 wherein the scanning of the surface is performed by at least one of a scanning device, a laser scanning device, an optical scanning device, a laser measurement system, an optical measurement system, a structured light scanner, a laser radar scanner and a light detection and ranging scanner.
Clause 14. The method according to any of the preceding Clauses wherein the surface scan data comprises a plurality of surface scan points and the surface design data comprises a plurality of surface design points, the comparing of the surface scan data to the surface design data comprising:
   performing a best fit analysis on the plurality of surface scan points and the plurality of surface design points to define a plurality of pairs of comparable data points, each comparable data point comprising a surface scan point and a comparable surface design point.
Clause 15. The method of Clause 14 wherein the best fit analysis is performed using a least squares method.
Clause 16. The method of Clause 14 or 15 the determining of the deviation data values comprising:
   determining a distance between the surface scan point and the comparable surface design point for each pair of comparable data points.
Clause 17. The method according to any of the preceding Clauses, the projecting of the first data point and the neighboring data points comprising:
   projecting the first data point to an origin in the XY plane; and
   projecting the neighboring data points from positions in the first XYZ coordinate system linearly toward the XY plane.
Clause 18. The method according to any of the preceding Clauses, the projecting of the first data point and the neighboring data points comprising:
   projecting the first data point to an origin in the XY plane;
   flattening a contour of the neighboring data points in the first XYZ coordinate system toward the XY plane in a manner that approximately maintains distances between the first data point and the neighboring data points in the XY plane; and
   projecting the neighboring data points linearly toward the XY plane based on positions resulting from the flattening.
Clause 19. The method according to any of the preceding Clauses, further comprising:
   assigning the deviation data values for the first data point and the neighboring data points from the first XYZ coordinate system as Z-axis values for the first data point and the neighboring data points in the second XYZ coordinate system; and
   filtering the first data point in relation to the neighboring data points to identify a waviness deviation data value for the first data point in the first XYZ coordinate system.
Clause 20. The method of Clause 19 wherein the filtering of the first data point is performed using a low-pass filter.
Clause 21. The method of Clause 19 or 20 wherein the filtering of the first data point is performed using a robust gaussian regression filter.
Clause 22. The method of Clause 19, 20 or 21, further comprising:
   repeating the selecting of the first data point and the neighboring data points, the determining of the average normal vector, the defining of the XY plane, the projecting of the first data point and the neighboring data points, the assigning of the deviation data values and the filtering of the first data point for a next data point of the plurality of deviation data points until a last data point of the plurality of deviation data points is completed, wherein, after the last data point is completed, a plurality of waviness deviation data values are identified in the first XYZ coordinate system.
Clause 23. The method of Clause 22 wherein the plurality of waviness deviation data values in the first XYZ coordinate system define the local variations in the surface of the fabricated component.
Clause 24. The method of Clause 22 or 23, further comprising:
   processing the plurality of waviness deviation data values in the first XYZ coordinate system to generate shim design data for fabrication of a shim configured to mate with the local variations in the surface of the fabricated component on a first side and configured to mate with an opposing surface of a further component to which the fabricated component is to be joined. Clause 25. The method of Clause 24 wherein the shim is configured for positioning between the fabricated component and the further component to fill gaps between the fabricated component and the further component when the fabricated component, the shim and the further component are joined together.
Clause 26. The method of Clause 24 or 25, further comprising:
   at least temporarily storing the shim design data in a data storage device; and
   transmitting the shim design data to a design data repository for storage.
Clause 27. A computerized system for determining local variations in a surface of a fabricated component, the computerized system comprising:
   at least one computing device, comprising:
      at least one processor and associated memory; and
      a network interface in operative communication with the at least one processor and configured to communicate with a fabricated component data repository and a design data repository via a communication network; and
   at least one application program storage device in operative communication with the at least one processor and configured to store a surface analysis application program and a surface filter application program; and
   at least one data storage device in operative communication with the at least one processor, and
   wherein the at least one processor and the network interface are configured to obtain a three-dimensional point cloud representative of the surface of the fabricated component from the fabricated component data repository, wherein the at least one processor and the network interface are configured to obtain surface design data for the fabricated component from the design data repository, and
   wherein the at least one processor is configured to store the three-dimensional point cloud and the surface design data in the at least one data storage device.
Clause 28. The computerized system of Clause 27 wherein the local variations comprise at least one of small-scale surface variations, short scale lateral variations, waviness deviations, undulations, low frequency surface variations and unexpected surface variations.
Clause 29. The computerized system of Clause 27 or 28 wherein the surface of the fabricated component is configured to mate with an opposing surface of a further component when the fabricated component is joined with the further component.
Clause 30. The computerized system according to any of the preceding Clauses 27 to 29 wherein the surface design data is represented in a first XYZ coordinate system.
Clause 31. The computerized system according to any of the preceding Clauses 27 to 30 wherein the at least one processor, in conjunction with the surface analysis application program, is configured to compare surface scan data for the fabricated component represented in a first XYZ coordinate system to surface design data for the fabricated component, wherein the at least one data storage device is configured to store the first XYZ coordinate system, and
   wherein the at least one processor, in conjunction with the surface analysis application program, is configured to determine deviation data values for the surface of the fabricated component based on comparing the surface scan data to the surface design data, wherein the deviation data values are represented as a plurality of deviation data points, wherein the at least one data storage device is configured to store the deviation data values and the plurality of deviation data points, and
   wherein the at least one processor, in conjunction with the surface analysis application program, is configured to select a first data point and neighboring data points from the plurality of deviation data points, and
   wherein the at least one processor, in conjunction with the surface analysis application program, is configured to determine an average normal vector for the first data point based on normal vectors of the first data point and the neighboring data points, wherein the at least one data storage device is configured to store the average normal vector, and
   wherein the at least one processor, in conjunction with the surface analysis application program, is configured to define an XY plane of a second XYZ coordinate system perpendicular to the average normal vector for the first data point, wherein the at least one data storage device is configured to store the XY plane, and
   wherein the at least one processor, in conjunction with the surface analysis application program, is configured to project the first data point and the neighboring data points from the first XYZ coordinate system onto the XY plane of the second XYZ coordinate system, wherein the at least one data storage device is configured to store the first data point and the neighboring data points in the XY plane.
Clause 32. The computerized system of Clause 31 wherein the plurality of deviation data points are represented in the first XYZ coordinate system.
Clause 33. The computerized system of Clause 31 or 32, further comprising:
   at least one scanning device in operative communication with the fabricated component data repository and configured to scan the surface of the fabricated component to generate the three-dimensional point cloud representative of the surface, and
   wherein the at least one scanning device is configured to at least temporarily store the three-dimensional point cloud in the fabricated component data repository, and
   wherein the at least one processor and the at least one data storage device, in conjunction with the surface analysis application program, are configured to obtain the three-dimensional point cloud from the fabricated component data repository, align the three-dimensional point cloud in the first XYZ coordinate system to define the surface scan data for the fabricated component and store the surface scan data in the at least one data storage device, and
   wherein the at least one processor is configured to obtain the surface scan data from the at least one data storage device in conjunction with determining the local variations in the surface of the fabricated component.
Clause 34. The computerized system of Clause 33 wherein the at least one scanning device comprises one or more of a laser scanning device, an optical scanning device, a laser measurement system, an optical measurement system, a structured light scanner, a laser radar scanner and a light detection and ranging scanner.
Clause 35. The computerized system of any of Clauses 31 to 34 wherein the surface scan data comprises a plurality of surface scan points and the surface design data comprises a plurality of surface design points, and
   wherein the at least one processor, in conjunction with the surface analysis application program, is configured to obtain the surface scan data, the plurality of surface scan points, the surface design data and the plurality of surface design points from the at least one data storage device, and
   wherein the at least one processor, in conjunction with the surface analysis application program, is configured to compare the surface scan data to the surface design data by performing a best fit analysis on the plurality of surface scan points and the plurality of surface design points to define a plurality of pairs of comparable data points, each comparable data point comprising a surface scan point and a comparable surface design point, and
   wherein the at least one data storage device is configured to store the plurality of pairs of comparable data points.
Clause 36. The computerized system of Clause 35 wherein the best fit analysis is performed using a least squares method.
Clause 37. The computerized system of Clause 35 or 36 wherein the at least one processor, in conjunction with the surface analysis application program, is configured to determine the deviation data values by determining a distance between the surface scan point and the comparable surface design point for each pair of comparable data points.
Clause 38. The computerized system of any of Clauses 31 to 37 wherein the at least one processor , in conjunction with the surface analysis application program, is configured to project the first data point and the neighboring data points by projecting the first data point to an origin in the XY plane and projecting the neighboring data points from positions in the first XYZ coordinate system linearly toward the XY plane.
Clause 39. The computerized system of any of Clauses 31 to 38 wherein the at least one processor, in conjunction with the surface analysis application program, is configured to project the first data point and the neighboring data points by projecting the first data point to an origin in the XY plane, flattening a contour of the neighboring data points in the first XYZ coordinate system toward the XY plane in a manner that approximately maintains distances between the first data point and the neighboring data points in the XY plane and projecting the neighboring data points linearly toward the XY plane based on positions resulting from the flattening.
Clause 40. The computerized system of any of Clauses 31 to 39 wherein the at least one processor and the at least one data storage device, in conjunction with the surface filter application program, are configured to assign the deviation data values for the first data point and the neighboring data points from the first XYZ coordinate system as Z-axis values for the first data point and the neighboring data points in the second XYZ coordinate system, and
   wherein the at least one processor and the at least one data storage device, in conjunction with the surface filter application program, are configured to filter the first data point in relation to the neighboring data points to identify a waviness deviation data value for the first data point in the first XYZ coordinate system.
Clause 41. The computerized system of Clause 40 wherein the surface filter application program performs filtering of the first data point using a low-pass filter.
Clause 42. The computerized system of Clause 40 or 41 wherein the surface filter application program performs filtering of the first data point using a robust gaussian regression filter.
Clause 43. The computerized system of Clause 40, 41 or 42 wherein the at least one processor, the at least one application program storage device and the at least one data storage device, in conjunction with the surface analysis application program and the surface filter application program, are configured to repeat selecting the first data point and the neighboring data points, determining the average normal vector, defining of the XY plane, projecting the first data point, assigning the deviation data values and filtering the first data point for a next data point of the plurality of deviation data points until a last data point of the plurality of deviation data points is completed, wherein, after the last data point of the plurality of deviation data points is completed, a plurality of waviness deviation data values are identified in the first XYZ coordinate system, and
   wherein the at least one data storage device is configured to store the plurality of waviness deviation data values in the first XYZ coordinate system.
Clause 44. The computerized system of Clause 43 wherein the plurality of waviness deviation data values in the first XYZ coordinate system define the local variations in the surface of the fabricated component.
Clause 45. The computerized system of Clause 43 or 44 wherein the at least one processor, in conjunction with a shim design application program, is configured to process the plurality of waviness deviation data values in the first XYZ coordinate system to generate shim design data for fabrication of a shim configured to mate with the local variations in the surface of the fabricated component on a first side and configured to mate with an opposing surface of a further component to which the fabricated component is to be joined, and
   wherein the at least one data storage device is configured to store the shim design data.
Clause 46. The computerized system of Clause 45 wherein the shim is configured for positioning between the fabricated component and the further component to fill gaps between the fabricated component and the further component when the fabricated component, the shim and the further component are joined together.
Clause 47. The computerized system of Clause 45 or 46 wherein the at least one processor, in conjunction with the shim design application program, is configured to at least temporarily store the shim design data in the data storage device and to transmit the shim design data to the design data repository for storage.
Clause 48. A non-transitory computer-readable medium comprising program instructions that, when executed by at least one processor, cause at least one computing device to perform a method for determining local variations in a surface of a fabricated component, the method comprising:
   comparing surface scan data for the fabricated component represented in a first XYZ coordinate system to surface design data for the fabricated component;
   determining deviation data values for the surface of the fabricated component based on the comparing, wherein the deviation data values are represented as a plurality of deviation data points;
   selecting a first data point and neighboring data points from the plurality of deviation data points;
   determining an average normal vector for the first data point based on normal vectors of the first data point and the neighboring data points;
   defining an XY plane of a second XYZ coordinate system perpendicular to the average normal vector for the first data point; and
   projecting the first data point and the neighboring data points from the first XYZ coordinate system onto the XY plane of the second XYZ coordinate system.
Clause 49. The non-transitory computer-readable medium of Clause 48, the method further comprising:
   scanning the surface of the fabricated component to generate a three-dimensional point cloud representative of the surface;
   at least temporarily storing the three-dimensional point cloud in a fabricated component data repository;
   obtaining the three-dimensional point cloud from the fabricated component data repository;
   aligning the three-dimensional point cloud in the first XYZ coordinate system to define the surface scan data for the fabricated component;
   at least temporarily storing the surface scan data in a data storage device; and
   obtaining the surface scan data from the data storage device in conjunction with the determining of the local variations in the surface of the fabricated component.
Clause 50. The non-transitory computer-readable medium of any of Clauses 48 to 49 wherein the surface scan data comprises a plurality of surface scan points and the surface design data comprises a plurality of surface design points, the comparing of the surface scan data to the surface design data comprising:
   performing a best fit analysis on the plurality of surface scan points and the plurality of surface design points to define a plurality of pairs of comparable data points, each comparable data point comprising a surface scan point and a comparable surface design point.
Clause 51. The non-transitory computer-readable medium of any of Clauses 48 to 50, the determining of the deviation data values comprising:
   determining a distance between the surface scan point and the comparable surface design point for each pair of comparable data points.
Clause 52. The non-transitory computer-readable medium of any of Clauses 48 to 51, the projecting of the first data point and the neighboring data points comprising:
   projecting the first data point to an origin in the XY plane; and
   projecting the neighboring data points from positions in the first XYZ coordinate system linearly toward the XY plane.
Clause 53. The non-transitory computer-readable medium of any of Clauses 48 to 52, the projecting of the first data point and the neighboring data points comprising:
   projecting the first data point to an origin in the XY plane;
   flattening a contour of the neighboring data points in the first XYZ coordinate system toward the XY plane in a manner that approximately maintains distances between the first data point and the neighboring data points in the XY plane; and
   projecting the neighboring data points linearly toward the XY plane based on positions resulting from the flattening.
Clause 54. The non-transitory computer-readable medium of any of Clauses 48 to 53, the method further comprising:
   assigning the deviation data values for the first data point and the neighboring data points from the first XYZ coordinate system as Z-axis values for the first data point and the neighboring data points in the second XYZ coordinate system; and
   filtering the first data point in relation to the neighboring data points to identify a waviness deviation data value for the first data point in the first XYZ coordinate system.
Clause 55. The non-transitory computer-readable medium of Clause 54, the method further comprising:
   repeating the selecting of the first data point and the neighboring data points, the determining of the average normal vector, the defining of the XY plane, the projecting of the first data point and the neighboring data points, the assigning of the deviation data values and the filtering of the first data point for a next data point of the plurality of deviation data points until a last data point of the plurality of deviation data points is completed, wherein, after the last data point of the plurality of deviation data points is completed, a plurality of waviness deviation data values are identified in the first XYZ coordinate system.
Clause 56. The non-transitory computer-readable medium of Clause 55, the method further comprising:
   processing the plurality of waviness deviation data values in the first XYZ coordinate system to generate shim design data for fabrication of a shim configured to mate with the local variations in the surface of the fabricated component on a first side and configured to mate with an opposing surface of a further component to which the fabricated component is to be joined. Clause 57. The non-transitory computer-readable medium of Clause 56, the method further comprising:
   at least temporarily storing the shim design data in a data storage device; and
   transmitting the shim design data to a design data repository for storage.

## Claims

1. A method (100) for determining local variations (202) in a surface (204) of a fabricated component (200), comprising:
comparing (102) surface scan data (206) for the fabricated component (200) represented in a first XYZ coordinate system (1228) to surface design data (208) for the surface (204) of the fabricated component (200);
determining (104) deviation data values (210) for the surface (204) of the fabricated component (200) based on the comparing, wherein the deviation data values (210) are represented as a plurality of deviation data points (1230);
selecting (106) a first data point (302) and neighboring data points (304) from the plurality of deviation data points (1230);
determining (108) an average normal vector (1232) for the first data point (302) based on normal vectors of the first data point (302) and the neighboring data points (304);
defining (110) an XY plane (1234) of a second XYZ coordinate system (1244) perpendicular to the average normal vector (1232) for the first data point (302); and
projecting (112) the first data point (302) and the neighboring data points (304) from the first XYZ coordinate system (1228) onto the XY plane (1234) of the second XYZ coordinate system (1244).

2. The method of Claim 1 wherein the local variations (202) comprise at least one of small-scale surface variations, short scale lateral variations, waviness deviations, undulations, low frequency surface variations and unexpected surface variations.

3. The method of any of Claims 1 to 2 wherein the surface (204) of the fabricated component (200) is configured to mate with an opposing surface of a further component (1226) when the fabricated component (200) is joined with the further component (1226).

4. The method of any of Claims 1 to 3 wherein the surface design data (208) is represented in the first XYZ coordinate system (1228).

5. The method of any of Claims 1 to 4 wherein the plurality of deviation data points (1230) are represented in the first XYZ coordinate system (1228).

6. The method of any of Claims 1 to 5 wherein the neighboring data points (304) are within a predetermined neighborhood relating to the first data point (302).

7. The method of any of Claims 1 to 6 wherein the neighboring data points (304) are within a predetermined range of the first data point (302).

8. The method of any of Claims 1 to 7 wherein the normal vectors for the first data point (302) and the neighboring data points (304) are oriented perpendicular to the surface (204) of the fabricated component (200) at the first data point (302) and the neighboring data points (304).

9. The method of Claim 8 wherein the average normal vector (1232) at the first data point (302) is oriented in a direction based on the average of orientations of the normal vectors of the neighboring data points (304).

10. The method of any of Claims 1 to 9 wherein the normal vectors for the first data point (302) and the neighboring data points (304) are unit vectors oriented along estimated normal vectors of a three-dimensional point cloud (1224) representative of the surface (204) at the first data point (302) and the neighboring data points (304).

11. The method of Claim 10 wherein the average normal vector (1232) at the first data point (302) is oriented in a direction based on the average of orientations of the unit vectors to the first data point (302) with a length of one unit.

12. The method (400) of any of Claims 1 to 11, further comprising:
scanning (402) the surface (204) of the fabricated component (200) to generate a three-dimensional point cloud (1224) representative of the surface (204);
at least temporarily storing (404) the three-dimensional point cloud (1224) in a fabricated component data repository (1210);
obtaining (406) the three-dimensional point cloud (1224) from the fabricated component data repository (1210);
aligning (408) the three-dimensional point cloud (1224) in the first XYZ coordinate system (1228) to define the surface scan data (206) for the fabricated component (200);
at least temporarily storing (410) the surface scan data (206) in a data storage device (1222); and
obtaining (412) the surface scan data (206) from the data storage device (1222) in conjunction with the determining of the local variations (202) in the surface (204) of the fabricated component (200).

13. The method of Claim 12 wherein the scanning of the surface (204) is performed by at least one of a scanning device, a laser scanning device, an optical scanning device, a laser measurement system, an optical measurement system, a structured light scanner, a laser radar scanner and a light detection and ranging scanner.

14. A computerized system (1200) for determining local variations (202) in a surface (204) of a fabricated component (200), the computerized system comprising:
at least one computing device (1202), comprising:
at least one processor (1204) and associated memory (1206); and
a network interface (1208) in operative communication with the at least one processor (1204) and configured to communicate with a fabricated component data repository (1210) and a design data repository (1212) via a communication network (1214); and
at least one application program storage device (1216) in operative communication with the at least one processor (1204) and configured to store a surface analysis application program (1218) and a surface filter application program (1220); and
at least one data storage device (1222) in operative communication with the at least one processor (1204), and
wherein the at least one processor (1204) and the network interface (1208) are configured to obtain a three-dimensional point cloud (1224) representative of the surface (204) of the fabricated component (200) from the fabricated component data repository (1210), wherein the at least one processor (1204) and the network interface (1208) are configured to obtain surface design data (208) for the fabricated component (200) from the design data repository (1212), and
wherein the at least one processor (1204) is configured to store the three-dimensional point cloud (1224) and the surface design data (208) in the at least one data storage device (1222).

15. A non-transitory computer-readable medium (1300) comprising program instructions that, when executed by at least one processor (1204), cause at least one computing device (1202) to perform a method (100) as defined in any of claims 1 to 13.
